(19) Europäisches Patentamt

European Patent Office

Office européen des brevets

(11) EP 0 644 037 B1

(12) FASCICULE DE BREVET EUROPEEN

(45) Date de publication et mention de la délivrance du brevet:
**10.12.1997 Bulletin 1997/50**

(51) Int. Cl.$^6$: **B29C 55/30**, B29C 47/20, B29C 47/00

(21) Numéro de dépôt: **94402096.5**

(22) Date de dépôt: **21.09.1994**

(54) **Corps creux en resine fluorée, procédé pour sa fabrication et presse à extruder pour la mise en oeuvre du procédé**

Hohl-Körper aus fluorenthaltenden Harz, Verfahren zur Herstellung und Strangpresse zum Durchführen des Verfahren

Hollow article made from a fluororesin, process of manufacture and extruder for carrying out the process

(84) Etats contractants désignés:
**AT BE CH DE DK ES FR GB GR IT LI LU NL SE**

(30) Priorité: **22.09.1993 FR 9311265**

(43) Date de publication de la demande:
**22.03.1995 Bulletin 1995/12**

(73) Titulaire:
**COMPAGNIE PLASTIC OMNIUM**
**Société Anonyme dite:**
**69007 Lyon (FR)**

(72) Inventeur:
**Moret de Rocheprise, Bernard**
**F-52600 Chalindrey (FR)**

(74) Mandataire: **Leszczynski, André**
**NONY & ASSOCIES**
**29, rue Cambacérès**
**75008 Paris (FR)**

(56) Documents cités:
EP-A- 0 267 719          DE-A- 3 534 407
FR-A- 1 285 356          GB-A- 2 086 305
GB-A- 2 236 504          US-A- 3 315 020
US-A- 3 981 672          US-A- 4 225 547
US-A- 4 282 277

## Description

La présente invention concerne la fabrication de corps creux en résine fluorée, comportant un taux d'anisotropie, réglable, faible.

On connaît pour la fabrication de corps creux, tels que des tubes, en résine fluorée, notamment en polytétrafluoroéthylène (PTFE) un procédé d'extrusion désigné sous le nom d'extrusion pâteuse ou lubrifiée.

Ce procédé comporte les étapes consistant à mélanger une poudre fine de résine fluorée crue à environ 20 % de lubrifiant, à comprimer ce mélange pour obtenir une préforme tubulaire compacte, à introduire cette préforme dans une presse à extruder dans laquelle un piston refoule la préforme à travers une filière pour réaliser un profilé tubulaire.

Ce procédé permet la production de fibres ou de fibrilles de résine fluorée, ces fibres s'orientant naturellement dans le sens de l'écoulement de matière, autrement dit dans le sens longitudinal du corps, du fait de la section réduite de l'orifice de sortie de la filière.

Cette orientation longitudinale des fibres est en général néfaste du point de vue de la résistance mécanique car elle favorise la formation de fissures longitudinales, en début d'éclatement du corps, notamment dans le cas de tubes soumis à une pression interne.

On obtient généralement pour un tube ainsi fabriqué un taux d'anisotropie A sensiblement égal à 2.

$$A = \frac{\text{Résistance à la rupture en traction longitudinale}}{\text{Résistance à la rupture en traction transversale}}$$

Pour qu'un corps creux sous pression présente sensiblement les mêmes risques de fissuration dans les directions longitudinale et transversale, il est nécessaire que la résistance à la traction transversale soit le double de la résistance à la traction longitudinale, c'est-à-dire que le taux d'anisotropie A du corps creux soit sensiblement égal à 0,5.

On connaît de nombreuses techniques permettant de réduire le taux d'anisotropie d'un produit en PTFE obtenu par extrusion lubrifiée.

Une première technique consiste à faire varier le rapport de réduction R de la filière.

$$R = \frac{\text{Section de la préforme}}{\text{Section de l'orifice de sortie de la filière}}$$

La diminution du rapport de réduction de la filière permet de réduire le taux d'anisotropie.

Un exemple de cette technique est fourni par le document US-A-3315020 qui permet la fabrication de feuilles minces biorientées sensiblement isotropes, c'est-à-dire présentant un taux d'anisotropie voisin de 1.

Bien que ces modifications permettent de réduire le taux d'anisotropie, jusqu'au voisinage de 1, elles s'effectuent souvent au détriment de la valeur absolue de la résistance à la rupture du produit obtenu.

Une deuxième technique consiste à soumettre le produit à une recuisson qui permet de réduire l'orientation préalable des fibres et donc d'obtenir là-encore un taux d'anisotropie A proche de 1. Mais cette technique est particulièrement coûteuse.

Une troisième technique consiste à utiliser des poudres fortement modifiées et donc beaucoup plus chères que les poudres standards.

Les documents US-A-4 225 547 et EP-A-0 267 719, représentatifs du préambule des revendications indépendantes, montrent d'antres techniques permettant de réduire le taux d'anisotropie de tubes en PTFE obtenus par extrusion lubrifiée.

Cependant, quelle que soit la technique utilisée, il est actuellement impossible d'obtenir, par extrusion pâteuse, des produits en PTFE, et en particulier des corps creux présentant un taux d'anisotropie A sensiblement inférieur à 1.

La présente invention a pour objet un corps creux en résine fluorée, notamment en PTFE obtenu par extrusion pâteuse et qui se caractérise par le fait qu'il présente un taux d'anisotropie sensiblement inférieur à 1 et de préférence sensiblement égal à 0,5.

La présente invention a également pour but de proposer un procédé d'extrusion permettant l'obtention de tels corps creux, en particulier des tubes à paroi épaisse, sans diminution de la valeur absolue de la résistance à la rupture.

La présente invention a pour objet un procédé d'extrusion pour la fabrication de corps creux en résine fluorée, selon lequel on mélange une poudre fine de résine fluorée, notamment de PTFE cru, à du lubrifiant, on comprime le mélange pour obtenir une préforme tubulaire compacte isotrope, on introduit ladite préforme dans une presse à extruder et l'on repousse la préforme à travers un passage de section réduite d'une filière de manière à former des fibres orientées longitudinalement, caractérisé par le fait que l'on comprime à la sortie dudit passage lesdites fibres dans une chambre interne d'expansion à section agrandie, de manière à orienter transversalement lesdites fibres, qu'après passage dans la chambre interne d'expansion, on fait passer les fibres à travers un second passage de section réduite pour les réorienter partiellement dans la direction longitudinale, on comprime à nouveau les fibres dans une zone d'expansion de section agrandie de manière à conserver majoritairement l'orientation transversale des fibres, et que l'on refoule les fibres à travers l'orifice de sortie de la filière pour obtenir un corps creux.

On sépare ainsi l'écoulement de la matière à travers la presse à extruder en zones distinctes permettant chacune une orientation déterminée des fibres.

Une réduction de section de l'orifice de sortie d'une filière conduit à une orientation majoritairement longitudinale des fibres et un accroissement de section dudit orifice conduit à une orientation majoritairement transversale des fibres. En ajustant les sections respectives des différentes zones de la presse on peut alors ajuster le taux d'anisotropie du corps creux obtenu.

La présente invention a également pour objet une presse à extruder pour la mise en oeuvre du procédé précité, ladite presse comportant une filière qui présente à une extrémité un évidement, de préférence sensiblement conique, de réception d'une préforme tubulaire qui débouche dans un passage de section réduite et un élément central sensiblement cylindrique formant noyau de filière et traversant ledit évidement de réception et ledit passage, caractérisée en ce que ledit passage débouche dans une chambre interne d'expansion de section agrandie, que ladite chambre interne est raccordée par un second passage de section réduite à un évidement de sortie, de préférence sensiblement conique, ménagé à l'extrémité opposée de la filière, et que ledit élément central est raccordé à une pièce, de préférence sensiblement conique, apte à venir se loger dans l'évidement de sortie de manière à définir une zone d'expansion de section agrandie à la sortie dudit second passage.

La filière de la presse selon ce mode de réalisation est avantageusement constituée de deux parties distinctes qui viennent s'emboîter l'une dans l'autre, la première partie comportant l'évidement de réception et le premier passage et la deuxième partie comportant le second passage et l'évidement de sortie, un logement, de préférence tronconique, étant ménagé dans chacune des extrémités en regard desdites parties de manière à former ladite chambre interne d'expansion lorsque les parties sont emboîtées.

Le fait de prévoir la filière en deux parties distinctes permet de faire aisément varier la section de la chambre d'expansion, en ne remplaçant qu'une des deux parties à la fois.

Avantageusement, l'inclinaison de la génératrice de la pièce conique par rapport à son axe est légèrement supérieure à celle de l'évidement de sortie, de manière à réduire la section de la zone d'expansion au voisinage de l'orifice de sortie de la filière.

On obtient ainsi une nouvelle compression des fibres dans la zone d'expansion ce qui permet d'atteindre un taux d'anisotropie faible, notablement inférieur à 1 et même inférieur à 0,5.

Le fait de prévoir une pièce conique dans l'évidement de sortie de la filière permet de faire aisément varier l'épaisseur du profilé tubulaire fabriqué en déplaçant axialement la pièce conique dans ledit évidement de sortie par l'intermédiaire du noyau.

Dans le procédé d'extrusion lubrifié classique, l'on utilise des rapports de réduction R élevés, généralement compris entre 50 et 500.

Il est généralement admis que le rapport de réduction ne peut dépasser une valeur de seuil, fonction de la qualité de poudre utilisée, sans provoquer une détérioration de la poudre, résultant d'une compression trop élevée dans la filière de ladite poudre.

Selon la qualité de poudre utilisée, cette dernière peut subir une pression comprise entre 10 et 100 MPa.

Dans la filière selon la présente invention, à rapport de réduction égal, la pression que subit la poudre est nettement supérieure à celle d'une filière classique, du fait du second passage de section réduite qui constitue une zone de compression supplémentaire de la poudre.

Dans le procédé d'extrusion selon la présente invention, on utilise alors avantageusement un rapport de réduction global dans une plage comprise entre 2 et 20, ladite plage permettant de produire des corps creux sans détérioration de la poudre.

Pour mieux faire comprendre l'objet de la présente invention, on va en décrire ci-après, à titre d'exemple purement illustratif et non limitatif un mode de réalisation représenté sur le dessin annexé, dans lequel :

- la figure 1 est une vue en coupe longitudinale d'une presse à extruder classique,
- la figure 2 est une vue en coupe longitudinale partielle d'une presse à extruder selon la présente invention,
- la figure 3 est un graphique représentant la variation de la section interne de la filière de la figure 2 en fonction de la position axiale dans la filière.

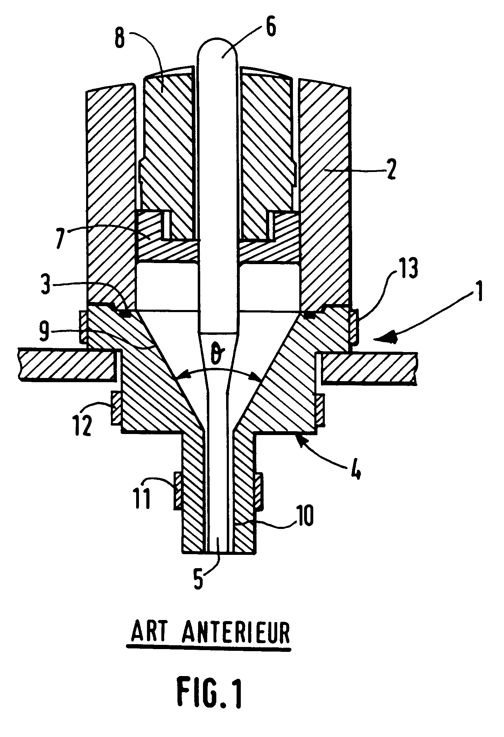

On voit sur la figure 1 une presse à extruder 1 comportant une chambre tubulaire 2 raccordée de manière étanche par un joint torique 3 à une filière 4, une tige centrale cylindrique 5 formant noyau de filière raccordée par l'intermédiaire d'un mandrin 6 à une partie fixe non représentée de la presse. Un piston 7 est apte à coulisser le long du mandrin 6 à l'intérieur de la chambre tubulaire 2.

Un poussoir 8 applique sur le piston 7 une force de compression engendrant une pression comprise entre 10 et 100 MPa dans la filière 4.

Un évidement conique 9 de réception de préformes est ménagé à l'extrémité amont de la filière 4 et débouche dans un passage cylindrique 10 de section réduite ménagé dans la filière.

L'angle d'ouverture θ de l'évidement conique de réception 11 est compris généralement entre 30 et 60°.

On a représenté sur la figure 1 des bandes annulaires de chauffage 11,12,13 destinées à chauffer la filière 4 à une température généralement comprise entre 30 et 60°C pour faciliter l'extrusion des préformes.

On obtient, grâce à ce procédé d'extrusion classique des corps creux présentant un taux d'anisotropie A supérieur à 1 et généralement sensiblement égal à 2.

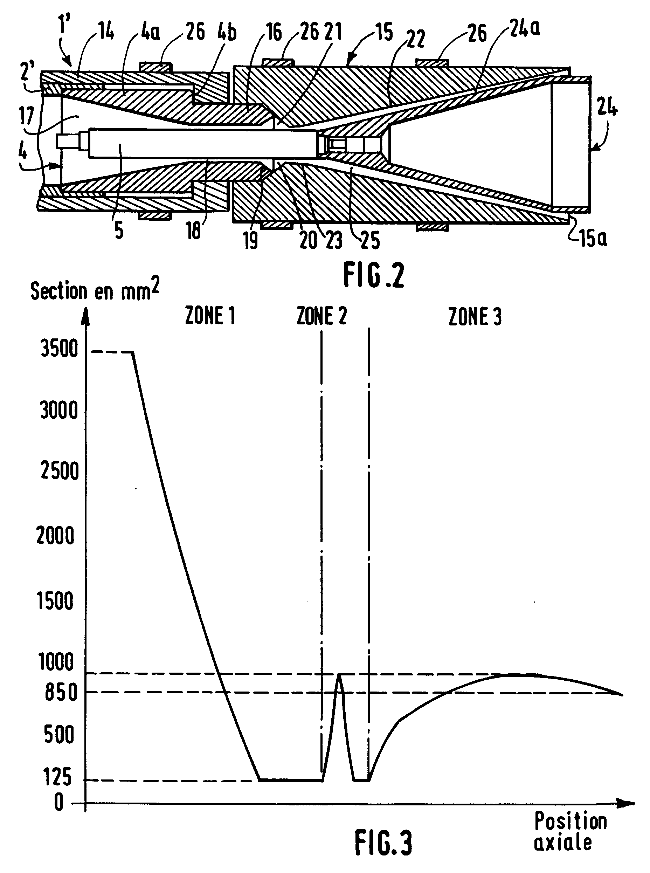

La figure 2 est une vue partielle d'une presse à extruder 1' selon la présente invention, représentant la partie terminale d'une chambre tubulaire 2' de réception des préformes (non représentées sur le dessin) raccordée, par l'intermédiaire d'un écrou 14, à une première partie 4 de la filière selon la présente invention.

La filière selon la présente invention est constituée en outre d'une seconde partie 15 qui vient s'emboîter dans la première partie 4.

Bien qu'il soit possible de réaliser la filière en un seul bloc, il est avantageux de la prévoir en deux parties distinctes 4 et 15, ce qui permet par exemple d'utiliser en tant que première partie 4 une filière classique, analogue à celle représentée sur la figure 1.

La première partie 4 présente un corps cylindrique 4$\underline{a}$ séparé par un épaulement 4$\underline{b}$ d'un prolongement tubulaire 16.

Un évidement sensiblement conique 17 de réception de préformes est ménagé à l'une des extrémités du corps cylindrique 4$\underline{a}$ et débouche dans un passage cylindrique 18 de section réduite, ménagé dans le prolongement tubulaire 16.

Le passage 18 débouche à son tour dans un logement tronconique 19 ménagé à l'extrémité libre du prolongement 16.

Le prolongement 16 est emboîté dans un logement de forme adaptée 20 ménagé à l'une des extrémités de la seconde partie 15 de la filière.

Les logements 19 et 20 définissent une chambre 21 de section agrandie lorsque les deux parties 4 et 15 de la filière sont emboîtées l'une dans l'autre.

Le logement 20 débouche dans un évidement de sortie 22 ménagé à l'autre extrémité longitudinale de la seconde partie 15 de la filière, en passant par un second passage cylindrique 23 de section réduite.

Un élément central cylindrique 5 formant noyau de filière traverse entièrement la première partie 4 de la filière et partiellement la seconde partie 15 de la filière.

L'extrémité amont de l'élément central 5 est apte à être montée sur un mandrin formant porte-noyau (non représenté sur la figure 2) et l'extrémité droite est raccordée à une pièce de forme sensiblement conique 24 logée à l'intérieur de l'évidement de sortie 22.

La surface externe de la pièce conique 24 et la surface interne de l'évidement de sortie 22 définissent une zone d'expansion 25 de section agrandie et variable.

La génératrice 24 $\underline{a}$ de la surface externe de la pièce conique 20 présente une inclinaison par rapport à son axe supérieure à celle de la génératrice de l'évidement de sortie 22, ce qui permet de réduire la section de la zone d'expansion 25 au voisinage de l'orifice de sortie 15$\underline{a}$ de la seconde partie 15 de la filière.

Bien entendu, la forme de la chambre d'expansion 21 et de la zone d'expansion 25 peut être modifiée sans sortir du cadre ni de l'esprit de la présente invention, à condition de prévoir une section agrandie.

On a également représenté sur la figure 2 des bandes annulaires de chauffage 26 analogues à celles illustrées en 11,12,13 sur la figure 1.

On a représenté sur la figure 3 la variation de la section interne d'un mode de réalisation particulier de la filière selon la présente invention, en fonction de la position axiale dans la filière.

On peut remarquer que l'écoulement de matière dans la filière se décompose en trois zones distinctes.

La zone 1 correspond à une filière classique du type illustré sur la figure 1 dans laquelle une préforme tubulaire de section S = 3500 mm$^2$ est apte à être filée dans un premier passage de section S1≈125 mm$^2$.

On obtient donc un premier rapport de réduction intermédiaire R1 = 28.

La zone 2 est constituée d'une chambre d'expansion de section maximale S2 ≈ 1000 mm$^2$ (facteur d'expansion 8) et qui débouche dans un second passage de section S3≈125 mm$^2$ .

La zone 2 joue donc le rôle d'une filière de rapport de réduction R2 = 8.

La zone 3 est constituée d'une zone d'expansion dont la section maximale S4 ≈ 1000 mm$^2$ et dont l'orifice de sortie a une section S 5≈850 mm$^2$.

La zone 3 joue donc également le rôle d'une filière dont le rapport de réduction R 3≈1,2.

La filière selon la présente invention présente donc un rapport de réduction globale Rg = R1/R2 X R3 , à savoir Rg ≈ 4.

Le rapport de réduction global (Rg = 4) de la filière selon la présente invention est donc très nettement inférieur au rapport de réduction généralement utilisé par une presse à extruder classique (R = 50 à 500).

Bien entendu, la section des premier et second passages, ainsi que la section de la chambre et de la zone d'expansion peuvent être différentes.

On va maintenant décrire un exemple de réalisation d'un tube selon le procédé d'extrusion de la présente invention, permettant d'obtenir un taux d'anisotropie A = 0,5.

Exemple

On utilise une poudre vierge de PTFE obtenue par coagulation d'une dispersion aqueuse puis séchage. On mélange cette poudre avec un lubrifiant isoparaffinique (ISOPAR) à raison d'environ 20 % en poids de lubrifiant.

On réalise une préforme compacte isotrope (A = 1) non fibrée, en comprimant à une pression de 1,5 MPa le mélange de poudre et de lubrifiant.

Cette préforme se présente sous la forme d'un tube de 70 mm de diamètre et 25 mm d'épaisseur, pour une section d'environ 3500 mm$^2$.

On introduit la préforme dans la presse à extruder, dont les caractéristiques sont illustrées sur la figure 3, sous une pression de 30 MPa et à une température de 40°C.

On obtient à la sortie de la zone 1 des fibres extrudées longitudinalement présentant un taux d'anisotropie A = 2.

A la sortie du premier passage, les fibres viennent se tasser et se comprimer dans la chambre d'expansion de la filière, suite à la réduction de section de la chambre au niveau du second passage, de manière à obtenir un taux d'anisotropie A = 0,5.

A la sortie du second passage de la zone 2, les fibres sont bi-orientées dans les directions longitudinale et transversale et présentent donc un taux d'anisotropie A = 1.

Enfin, les fibres se réorientent majoritairement dans la direction transversale dans la zone d'expansion 3 de manière à obtenir à la sortie de la filière un profilé tubulaire présentant un taux d'anisotropie A = 0,5.

Le profilé tubulaire obtenu présente un diamètre de 105 mm, une épaisseur de 2,6 mm, pour une section d'environ 850 mm$^2$ .

Si l'on obtient après une première extrusion un taux d'anisotropie A supérieur à 0,5, il est possible d'atteindre A = 0,5 dans les extrusions successives, en effectuant un ou plusieurs des réglages suivants :

- diminution du diamètre du premier passage de la filière,
- augmentation du diamètre de la chambre d'expansion,
- augmentation de la section du second passage de la filière.

Si l'on obtient, après une première extrusion, un taux d'anisotropie A inférieur à 0,5, on peut obtenir A = 0,5 en effectuant les opérations inverses que celles qui sont décrites ci-dessus, ou en augmentant le diamètre de la préforme.

De manière plus générale, il est possible de régler le taux d'anisotropie dans une très large plage de valeurs comprises entre 0,2 et 1 par le procédé d'extrusion de la présente invention, en faisant varier les paramètres cités ci-dessus.

Il est également possible, comme dans une extrusion lubrifiée classique, d'ajuster le taux d'anisotropie en faisant varier le taux de lubrifiant mélangé à la poudre ou en choisissant des qualités de poudres différentes.

Les corps creux obtenus par le procédé selon la présente invention présentent les avantages suivants :

- une aussi bonne résistance mécanique que les tubes obtenus par enroulement de bandes de résine fluorée,
- une plus grande résistance à l'éclatement sous pression et sous vide que les tubes classiques,
- une aussi bonne résistance que les tubes obtenus par extrusion lubrifiée classique, lorsqu'ils sont soumis au test d'épreuve préconisé par la norme ASTM F 423 "Standard specification for PTFE Plastic-lined Ferrous Metal Pipes, Fittings and Flanges" publiée en Septembre 1982,
- une réalisation aisée de collets à ses extrémités,
- un faible coût de fabrication,
- une plus faible aptitude à se fissurer que les tubes classiques.

Les tubes ainsi obtenus peuvent être en outre aisément calibrés pour d'éventuels raccords à d'autres éléments.

Le procédé selon la présente invention est par ailleurs, particulièrement bien adapté pour la fabrication de tubes pour flexibles convolutés ou ondulés.

Le procédé selon la présente invention permet également de réaliser, dans le cadre d'applications industrielles, des tubes de grand diamètre et de faible épaisseur, tout en présentant une pression d'éclatement supérieure aux tubes obtenus par un procédé classique.

**Revendications**

**1.** Corps creux en résine fluorée, notamment en PTFE obtenu par extrusion pâteuse, caractérisé par le fait qu'il présente un taux d'anisotropie sensiblement inférieur à 1, et de préférence sensiblement égal à 0,5.

2. Procédé d'extrusion pour la fabrication de corps creux en résine fluorée selon la revendication 1, selon lequel on mélange une poudre de résine fluorée, notamment de PTFE cru, à du lubrifiant, on comprime le mélange pour obtenir une préforme tubulaire compacte isotrope, on introduit ladite préforme dans une presse à extruder et l'on repousse la préforme à travers un passage de section réduite d'une filière de manière à former des fibres orientées longitudinalement, caractérisé par le fait que l'on comprime à la sortie dudit passage (18) lesdites fibres dans une chambre interne d'expansion (21) à section agrandie, de manière à orienter transversalement lesdites fibres, qu'après passage dans la chambre interne d'expansion, on fait passer les fibres à travers un second passage (23) de section réduite pour les réorienter partiellement dans la direction longitudinale, on comprime à nouveau les fibres dans une zone d'expansion (25) de section agrandie de manière à conserver majoritairement l'orientation transversale des fibres, et que l'on refoule les fibres à travers l'orifice de sortie (15a) de la filière (4,15) pour obtenir un corps creux.

3. Procédé d'extrusion selon la revendication 2, caractérisé en ce qu'on utilise pour la filière (4,15) un rapport de réduction global Rg dans une plage comprise entre 2 et 20.

4. Presse à extruder pour la mise en oeuvre du procédé selon la revendication 2, ladite presse comportant une filière qui présente à une extrémité un évidement, de préférence sensiblement conique, de réception d'une préforme tubulaire, qui débouche dans un passage de section réduite, et un élément central sensiblement cylindrique formant noyau de filière et traversant ledit évidement de réception et ledit premier passage, caractérisée en ce que le passage (18) débouche dans une chambre interne d'expansion (21), de section agrandie, que ladite chambre interne (21) est raccordée par un second passage (23), de section réduite, à un évidement de sortie (22), de préférence sensiblement conique, ménagé à l'extrémité opposée de la filière (4,15), et que ledit élément central (5) est raccordé à une pièce (24), de préférence sensiblement conique, apte à venir se loger dans l'évidement de sortie (22) de manière à définir une zone d'expansion (25) de section agrandie à la sortie dudit second passage (23).

5. Presse à extruder selon la revendication 4, caractérisée en ce que la filière est constituée de deux parties distinctes (4,15) qui viennent s'emboîter l'une dans l'autre, la première partie (4) comportant l'évidement de réception de préformes (17) et le passage (18), la deuxième partie (15) comportant le second passage (23) et l'évidement de sortie (22), un logement (19,20), de préférence tronconique, étant ménagé dans chacune des extrémités en regard desdites parties (4,15) de manière à former ladite chambre interne d'expansion (21) lorsque les parties (4,15) sont emboîtées.

6. Presse à extruder selon la revendication 4 ou 5, caractérisée en ce que l'inclinaison de la génératrice (24a) de la pièce conique (24) par rapport à son axe est légèrement supérieure à celle de l'évidement de sortie (22) de manière à réduire la section de la zone d'expansion (25) au voisinage de l'orifice de sortie (15a) de la filière.

**Claims**

1. A hollow body made of a resin containing fluorine, in particular of PTFE, obtained by extrusion of a paste, characterized in that it has an anisotropy rate that is substantially lower than 1 and preferably substantially equal to 0.5.

2. An extrusion method for the manufacture of hollow bodies made of a resin containing fluorine in accordance with claim 1, according to which a resin containing fluorine, in particular raw PTFE, is mixed with a lubricating agent, the mixture is compressed to obtain a compact isotropic tubular preform, the said preform is introduced into an extrusion press, and the preform is pushed back through a duct with a reduced cross-section of a die so as to form longitudinally orientated fibres, characterized in that at the outlet of the said duct (18), the said fibres are compressed in an internal expansion chamber (21) with an enlarged cross-section so as to orientate the said fibres transversely, that after passing into the internal expansion chamber, the fibres are caused to pass through a second duct (23) with a reduced cross-section, so as to reorientate them partly in the longitudinal direction; the fibres are again compressed in an expansion zone (25) with an enlarged cross-section so as to preserve in the main the transverse orientation of the fibres, and that the fibres are delivered through the outlet opening (15a) of the die (4, 15) to obtain a hollow body.

3. An extrusion method according to claim 2, characterized in that for the die (4, 15), an overall reduction ratio Rg is used in a range comprised between 2 and 20.

4. An extrusion press for operating the method according to claim 2, the said press comprising a die that has at one end a preferably substantially conical recess for receiving a tubular preform which leads into a duct with a reduced cross-section, and a central, substantially cylindrical element forming the core of the die and passing through the said receiving recess and the said first duct, characterized in that the duct (18) leads into an internal expansion chamber (21) with an enlarged cross-section, that the said internal chamber (21) is joined through a second duct (23) with a reduced cross-section to a preferably substantially conical outlet recess (22) arranged on the opposite side to the die (4, 15), and that the said central element (5) is joined to a preferably substantially conical part (24) that is capable of being accommodated in the outlet recess (22) so as to define an expansion zone (25) with an enlarged cross-section at the outlet of the said second duct (23).

5. An extrusion press according to claim 4, characterized in that the die is constituted by two separate parts (4, 15) which come to be fitted in one another, the first part (4) comprising the recess (17) for receiving the preforms and the duct (18), the second part (15) comprising the second duct (23) and the outlet recess (22), a preferably frustoconical cutout (19, 20) being arranged in each of the ends opposite the said parts (14, 15) so as to form the said internal expansion chamber (21) when the parts (4, 15) are fitted together.

6. An extrusion press according to claim 4 or 5, characterized in that the inclination of the generator (24a) of the conical parts (24) relative to its axis is slightly greater than that of the outlet recess (22) so as to reduce the cross-section of the expansion zone (25) in the vicinity of the outlet opening (15a) of the die.

**Patentansprüche**

1. Hohlkörper aus fluoriertem Harz, insbesondere aus PTFE, der durch Pastenextrusion erhalten wird, dadurch gekennzeichnet, daß er ein Anisotropieverhältnis aufweist, das im wesentlichen kleiner als 1 und vorzugsweise im wesentlichen gleich 0,5 ist.

2. Extrusionsverfahren zur Herstellung von Hohlkörpern aus fluoriertem Harz gemäß Anspruch 1, bei dem man ein Pulver aus fluoriertem Harz, insbesondere rohem PTFE, mit Schmiermittel mischt, die Mischung komprimiert, um einen kompakten, isotropen rohrförmigen Vorformling zu erhalten, den Vorformling in eine Extrusionspresse eingibt und durch eine im Querschnitt verengte Passage einer Düse preßt, so daß longitudinal orientierte Fasern gebildet werden, dadurch gekennzeichnet, daß man die Fasern am Austritt der Passage (18) in einer inneren Expansionskammer (21) mit vergrößertem Querschnitt komprimiert, so daß die Fasern transversal orientiert werden, daß man die Fasern nach dem Durchtritt durch die innere Expansionskammer durch eine zweite im Querschnitt verengte Passage (23) laufen läßt, um sie teilweise wieder in der longitudinalen Richtung zu reorientieren, die Fasern in einer Expansionszone (25) mit vergrößertem Querschnitt erneut komprimiert, so daß mehrheitlich die transversale Orientierung der Fasern konserviert wird, und daß man die Fasern durch die Austrittsöffnung (15a) der Düse (4, 15) auspreßt, um einen Hohlkörper zu erhalten.

3. Verfahren nach Anspruch 2, dadurch gekennzeichnet, daß man für die Düse (4, 15) ein globales Reduktionsverhältnis Rg im Bereich zwischen 2 und 20 verwendet.

4. Extrusionspresse zur Durchführung des Verfahrens nach Anspruch 2, welche Presse eine Düse aufweist, die an einem Ende eine im wesentlichen konische Ausnehmung zur Aufnahme eines rohrförmigen Vorformlings, die in eine im Querschnitt verengte Passage mündet, und ein im wesentlichen zylindrisches zentrales Element aufweist, das einen Düsenkern bildet und die genannte Ausnehmung und die erste Passage durchsetzt, dadurch gekennzeichnet, daß die Passage 18 in eine innere Expansionskammer 21 mit vergrößertem Querschnitt mündet, daß diese innere Kammer (21) durch eine im Querschnitt verengte zweite Passage (23) mit einer vorzugsweise im wesentlichen konischen Ausgangs-Ausnehmung (22) verbunden ist, die am entgegengesetzten Ende der Düse (4, 15) ausgebildet ist, und daß das zentrale Element (5) an ein vorzugsweise im wesentlichen konisches Teil (24) angeschlossen ist, das zur Aufnahme in der Ausgangs-Ausnehmung (22) ausgebildet ist, derart, daß eine Expansionszone (25) mit vergrößertem Querschnitt am Ausgang der zweiten Passage (23) gebildet wird.

5. Extrusionspresse nach Anspruch 4, dadurch gekennzeichnet, daß die Düse durch zwei getrennte, ineinandergesteckte Teile (4, 15) gebildet wird, von denen der erste Teil (4) die Ausnehmung (17) zur Aufnahme des Vorformlings und die Passage (18) bildet, während der zweite Teil (15) die zweite Passage (23) und die Ausgangs-Ausnehmung (22) aufweist, wobei in jedem der gegenüberliegenden Enden der Teile (4, 15) eine vorzugsweise kegelstumpfförmige Höhlung (19, 20) ausgebildet ist, derart, daß sie die innere Expansionskammer (21) bilden, wenn die Teile (4, 15) ineinandergesteckt sind.

6. Extrusionspresse nach Anspruch 4 oder 5, dadurch gekennzeichnet daß die Neigung der Mantellinie (24a) des konischen Teils (24) in bezug auf seine Achse etwas größer ist als diejenige der Ausgangs-Ausnehmung (22), so daß der Querschnitt der Expansionszone (25) in der Nähe der Austrittsoffnung (15a) der Düse reduziert wird.

ART ANTERIEUR

FIG.1

**FIG.2**

**FIG.3**